# EUROPÄISCHE PATENTSCHRIFT

(11) **EP 0 986 617 B1**
(45) Veröffentlichungstag und Bekanntmachung des Hinweises auf die Patenterteilung: **04.09.2002**
(21) Anmeldenummer: 98925620.1
(22) Anmeldetag: 20.05.1998
(51) Int. Cl.: C09D 151/08, C08F 283/00, B05D 1/38

(54) **VERFAHREN ZUR HERSTELLUNG EINER MEHRSCHICHTIGEN LACKIERUNG UND WÄSSRIGER LACK**
METHOD FOR PRODUCING A MULTI-COAT PAINT AND AN AQUEOUS VARNISH
PROCEDE POUR LA FABRICATION D'UNE PEINTURE MULTICOUCHES, ET VERNIS AQUEUX

(30) Priorität: 31.05.1997 DE 19722862
(43) Veröffentlichungstag der Anmeldung: 22.03.2000
(73) Patentinhaber: BASF Coatings AG, 48165 Münster (DE)
(72) Erfinder: LETTMANN, Bernhard, D-48317 Drensteinfurt (DE); BRÜGGEMANN, Hermann, D-48165 Münster (DE); HARTUNG, Michael, D-59590 Geseke (DE)
(74) Vertreter: Fitzner, Uwe, Dr.
(86) Internationale Anmeldenummer: EP9802952
(87) Internationale Veröffentlichungsnummer: WO98054266

(56) Entgegenhaltungen:
- WO-A-91/15528
- DATABASE WPI Section Ch, Week 9347 Derwent Publications Ltd., London, GB; Class A18, AN 93-374748 XP002900107 & JP 05 279620 A (DAINIPPON INK & CHEM KK) , 26. Oktober 1993

## Beschreibung

Die Erfindung betrifft einen wäßrigen Lack und die Verwendung eines solchen Lackes in einem Verfahren zur Herstellung zweischichtiger Lackierungen. - Wäßrige Lacke werden insbesondere zur Herstellung von zweischichtigen Kraftfahrzeug-Decklackierungen des basecoat-clearcoat-Typs eingesetzt. Erfindungsgemäße Lacke sind dabei insbesondere die sogenannten basecoat- bzw. Basislacke. Die Qualität einer mit einem Verfahren zur Herstellung zweischichtiger Lackierungen erhältlichen Lackierung hängt ganz wesentlich von dem eingesetzten wäßrigen Basislack ab.

In der EP-A-353 797 werden wäßrige Lacke beschrieben, die als Basislacke eingesetzt werden können. Die insofern bekannten Lacke enthalten als Bindemittel ein Polymer, das erhältlich ist, indem Acrylat und/oder Methacrylatmonomere in Gegenwart eines anionischen Polyurethanharzes, das auch Vinylgruppen enthalten kann, einer durch wasserlösliche Initiatoren gestarteten Emulsionspolymerisation unterworfen werden. Wenn die in der EP-A-353 797 beschriebenen wäßrigen Lacke als Basislacke in dem oben angesprochenen Verfahren eingesetzt werden, werden zweischichtige Lackierungen erhalten, die eine unbefriedigende Stabilität gegenüber kondensierter Feuchtigkeit aufweisen. Dieser Nachteil tritt insbesondere bei Reparaturlackierungen, die nur bei Temperaturen von bis zu 80 °C ausgehärtet werden, zutage. Außerdem zeigen die in der EP-A-353 797 beschriebenen wäßrigen Lacke eine unbefriedigende Lagerstabilität, wenn sie ein Melaminharz als zusätzliche Bindemittelkomponente enthalten.

In der EP-A-297 576 wird ein Verfahren zur Herstellung von zweischichtigen Lackierungen der oben beschriebenen Art beschrieben, wobei als Basislack wäßrige Lacke eingesetzt werden, die eine wäßrige Dispersion eines Polymeren enthalten, die erhältlich ist, indem ethylenisch ungesät- tigte Monomere in einer wäßrigen Dispersion in Gegenwart eines harnstoffgruppenhaltigen Polyurethanharzes, das keine Vinylgruppen enthält, polymerisiert werden. Wenn die in der EP-A-297 576 beschriebenen wäßrigen Lacke in dem vorstehend angesprochenen Verfahren zur Herstellung von zweischich- tigen Lackierungen als Basislacke eingesetzt werden, dann werden zweischichtige Lackierungen erhalten, die hinsicht- lich ihrer Beständigkeit gegenüber Kondenswasser verbes- serungsbedürftig sind. Außerdem werden bei den in der EP-A-297 576 beschriebenen wäßrigen Lacke oft mangelnde Lagerstabilität und auf Unverträglichkeiten zurück zu führende Störungen beobachtet, wenn Kombinationen aus verschiedenen Bindemitteln eingesetzt werden.

In der DE-A-40 10 176 wird ein Verfahren zur Herstellung einer zweischichtigen Lackierung beschrieben, bei dem ein wäßriger Basislack eingesetzt wird, der als Bindemittel ein Polymer enthält, das erhältlich ist, indem in einem organischen Lösemittel ethylenisch ungesättigte Monomere in Gegenwart eines Polyurethanharzes, das polymerisierbare Doppelbindungen enthält, polymerisiert werden und das so erhaltene Reaktionsprodukt in eine wäßrige Dispersion überführt wird. Wenn in dem in der DE-A-40 10 176 beschriebenen Verfahren metallpigmenthaltige Basislacke eingesetzt werden, werden zweischichtige Metalleffekt- lackierungen erhalten, die hinsichtlich ihres Metall- effektes verbesserungsbedürftig sind. Schließlich ist die Steinschlagfestigkeit noch weiter verbesserungsfähig.

Aus der Literaturstelle DE P 4339870.7 ist ein wäßriger Lack auf der Basis einer wäßrigen Dispersion eines Polyurethanharzes bekannt, welches mit ethylenisch ungesättigten Monmeren in Gegenwart eines wasserunlöslichen Initiators polymerisiert ist. Der insofern bekannte Lack eignet sich nur wenig zur Anreibung von Pigmenten aufgrund einer unzureichenden Scherstabilität.

Aus den Literaturstellen EP 522419 und EP 522420 ist die Polymerisation von Monomeren in Gegenwart von Polyurethan- dispersionen, die polymerisierbare Doppelbindungen ent- halten, bekannt. Gemäß dieser Literaturstellen wird bei der Polymerisation mit wasserlöslichen Initiatoren gearbeitet, was zu einer unbefriedigenden Lagerstabilität von mit solchen Bindemitteln hergestellten Lacken führt. Die Polymerisation wird zudem in wäßriger Phase durchgeführt, was zu Bindemitteln führt, die vergleichsweise schlecht zur Anreibung von Pigmenten geeignet sind.

Das der Erfindung zugrundeliegende technische Problem besteht in der Bereitstellung eines neuen wäßrigen Lackes zur Herstellung von zweischichtigen Lackierungen der vorstehend angesprochenen Art, mit dem Lackierungen erhalten werden, die im Vergleich zum Stand der Technik verbesserte lacktechnische Eigenschaften haben und insbesondere die oben beschriebenen Nachteile des Standes der Technik nicht bzw. in vermindertem Ausmaß aufweisen.

Diese Aufgabe wird überraschenderweise durch einen wäßrigen Lack gelöst, der 5 - 95 Gew.-% (bezogen auf den gesamten Bindemittelgehalt) einer Bindemittelkomponente a) und 5 - 95 Gew.-% (bezogen auf den gesamten Bindemittelgehalt) einer Bindemittelkomponente b) enthält, wobei die Bindemittelkomponente a) erhältlich ist, indem in einer wäßrigen Dispersion eines Polyurethanharzes, das ein zahlenmittleres Molekulargewicht von 1.000 bis 30.000 aufweist und im statistischen Mittel pro Molekül 0,05 bis 1,1 polymerisierbare Doppelbindungen enthält, ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren radikalisch polymerisiert wird, wobei das Gewichtsverhältnis zwischen dem Poly- urethanharz und dem ethylenisch ungesättigten Monomeren bzw. dem Gemisch aus ethylenisch ungesättigten Monomeren zwischen 1:10 und 10:1 liegt, und wobei die Bindemittelkomponente b) erhältlich ist, indem in einem organischen Lösemittel oder in einem Gemisch organischer Lösemittel (A) ethylenisch ungesättigte Monomere oder ein Gemisch ethylenisch ungesättigter Monomere in Gegenwart (B) eines Polyurethanharzes, das ein zahlenmittleres Molekulargewicht von 200 bis 30.000 aufweist und das im statistischen Mittel pro Molekül 0,05 bis 1,1 polymerisierbare Doppelbindungen enthält, polymerisiert werden und die so erhaltene Bindemittelkomponente b) in eine wäßrige Dispersion überführt wird. - Neben den Bindemittelkomponenten a) und b) können noch weitere Bindemittelkomponenten in dem Lack enthalten sein. Insbesondere können zusätzlich noch Vernetzungsmittel wie beispielsweise Melaminharze enthalten sein. Der wäßrige Lack wird durch Mischen der beiden (wäßrigen) Bindemittelkomponenten a) und b), ggf. mit weiteren üblichen Zusatzstoffen oder Hilfsstoffen sowie eines Vernetzungsmittels, und anschließendes homogenes Verühren oder dergleichen hergestellt.

Die Grundkonzeption der Erfindung besteht demnach in der Kombination zweier an sich aus dem Stand der Technik bekannter Bindemittel. Überraschenderweise zeigt eine solche Kombination dieser an sich als Einzelkom- ponenten entwickelten und eingesetzten Bindemittel in einem Lack einen beachtlichen synergistischen Effekt hinsichtlich der lacktechnischen Eigenschaften einer mit einem erfindungsgemäßen Lackes hergestellten Lackierung. Es hat sich nämlich gezeigt, daß eine solche erfindungsgemäße Lackierung im Vergleich mit dem Stand der Technik insbesondere eine ausgezeichnete Steinschlagfestigkeit aufweist. Die vorteilhaften lacktechnischen Eigenschaften beziehen sich dabei sowohl auf Serienlackierungen (Erstlackierungen) als auch auf Reparaturlackierungen.

Eine bevorzugte Ausführungsform der Erfindung ist dadurch gekennzeichnet, daß das Polyurethanharz der Bindemittel- komponente a) Acrylat-, Methacrylatund/oder Allylether- gruppen als polymerisierbare Doppelbindungen enthaltende Gruppen enthält. Vorteilhaft ist es, wenn das Polyurethan- harz der Bindemittelkomponente a) anionisch ist und eine Säurezahl von 20 bis 60 aufweist. Als ethylenisch ungesättigte Monomere der Bindemittelkomponente a) wird vorzugsweise ein Gemisch aus (i) 40 bis 100 Gew.-% eines aliphatischen oder cycloaliphatischen Esters der Acrylsäure oder Methacrylsäure, der weder Hydroxylnoch Carboxylgrup- pen enthält oder eines Gemisches aus solchen Estern,(ii) 0 bis 30 Gew.-% eines mindestens eine Hydroxylgruppe im Molekül tragenden ethylenisch ungesättigten Monomeren oder eines Gemisches aus solchen Monomeren,(iii) 0 bis 10 Gew.-% eines mindestens eine Carboxylgruppe im Molekül tragenden ethylenisch ungesättigten Monomeren oder eines Gemisches aus solchen Monomeren,(iv) 0 bis 50 Gew.-% eines von (i), (ii) und (iii) verschiedenen ethylenisch ungesättigten Monomeren oder eines Gemisches aus solchen Monomeren und (v) 0 bis 5 Gew.-% eines ethylenisch polyungesättigten Monomeren oder eines Gemisches aus solchen Monomeren, eingesetzt, wobei die Summe der Gewichtsanteile von (i), (ii), (iii), (iv) und (v) stets 100 Gew.-% ergibt.

Hinsichtlich der Bindemittelkomponente b) sind folgende Weiterbildungen zweckmäßg und/oder vorteilhaft. Das aus (A) und (B) hergestellte Polymer der Bindemittelkomponente b) kann eine Säurezahl von 5 bis 200, vorzugsweise 10 bis 40, besonders bevorzugt 15 bis 30, eine Hydroxylzahl von 0 bis 100, vorzugsweise 20 bis 80 und ein zahlenmittleres Molekulargewicht von 2000 bis 20.000, vorzugsweise 5000 bis 12.000 aufweisen. Das aus (A) und (B) hergestellte Polymer der Bindemittelkomponente b) weist vorteilhafterweise einen Polymolekularitätsindex Q = M_{W} : Mₙ von 5 bis 90, bevorzugt 10 bis 30 auf. Das Polymer der Bindemittelkomponente b) ist erhältlich, indem die Komponenten (A) und (B) in einem Gewichtsverhältnis von 1 : 10 bis 10 : 1, vorzugsweise 1 : 2 bis 2 : 1, besonders bevorzugt 1 : 1 eingesetzt werden. Als Komponente(B) der Bindemittelkomponente b) kann ein Polyurethanharz eingesetzt werden, das polymerisierbare Doppelbindungen enthält, die durch Einbau von Verbindungen, die neben einer polymerisierbaren Doppelbindung mindestens noch zwei gegenüber NCO-Gruppen reaktive Gruppen enthalten, in die Moleküle des Polyurethanharzes eingeführt worden sind. Im einzelnen kann als Komponente (B) der Bindemittelkomponente b) ein Polyurethanharz eingesetzt werden, das Allylethergruppen, insbesondere Trimethylolpropanmonoallyl- ether, als polymerisierbare Doppelbindungen enthält. Weiterhin bevorzugt ist es, wenn das Polymer der Bindemit- telkomponente b) erhältlich ist, indem als Komponente (B) ein Polyurethanharz eingesetzt wird, das eine Säurezahl von 0 bis 2,0 aufweist. Im einzelnen ist es wünschenswert, wenn das Polymer der Bindemittelkomponente b) erhältlich ist, indem als Komponente (B) ein Polyurethanharz eingesetzt wird, das ein zahlenmittleres Molekulargewicht von 1000 bis 5000 aufweist und im statistischen Mittel pro Molekül 0,2 bis 0,9, bevorzugt 0,3 bis 0,7, polymerisierbare Doppel- bindungen enthält.

Ein erfindunggemäßer wäßriger Lack enthält in der Regel Pigmente, insbesondere Uni-Farbpigmente. Es versteht sich, daß aber auch Effektpigmente wie Metallpigmente und/oder Micapigmente zusätzlich eingebaut sein können. Grundsätz- lich kann ein erfindungsgemäßer Lack jedoch auch als Klar- lack formuliert und somit zum Auftrag auf einen pigmentierten Basislack bestimmt sein.

Die Erfindung betrifft weiterhin die Verwendung eines erfindungsgemäßen wäßrigen Lackes als pigmentierter Basislack in einem Verfahren zur Herstellung einer zweischichtigen Lackierung auf einer Substratoberfläche, wobei (1) der Basislack auf die Substratoberfläche aufgebracht wird, (2) aus dem in Stufe (1) aufgebrachten Basislack ein Polymerfilm gebildet wird, (3) auf der so erhaltenen Basislackschicht ein transparenter Decklack aufgebracht wird und anschließend (4) die Basislackschicht zusammen mit der Decklackschicht eingebrannt wird, sowie die Verwendung eines erfindungsgemäßen Lackes zur Lackierung von KraftfahrzeugKarosserien oder Kraftfahr- zeug-Karosserieteilen.

Folgend wird im einzelnen die Herstellung der Bindemittelkomponente a) beschrieben. Die wäßrige Dispersion des dafür benötigten Polyurethanharzes ist herstellbar, indem aus (a1) einem Polyester- und/oder Polyetherpolyol mit einem zahlenmittleren Molekulargewicht von 400 bis 5000 oder einem Gemisch aus solchen Polyester- und/oder Polyetherpolyolen und (a2) einem Polyisocyanat oder einem Gemisch aus Polyisocyanaten, gegebenenfalls zusammen mit einem Monoisocyanat oder einem Gemisch aus Monoisocyanaten und (a3) einer Verbindung, die mindestens eine gegenüber Isocyanatgruppen reaktive und mindestens eine zur Anionenbildung befähigte Gruppe im Molekül aufweist oder einem Gemisch aus solchen Verbindungen oder (a4) einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen oder (a5) einer Mischung aus den Komponenten (a3) und (a4) und (a6) gegebenenfalls einer Verbindung, die neben einer polymerisierbaren Doppelbindung mindestens noch eine gegenüber NCO-Gruppen reaktive Gruppe enthält oder einem Gemisch aus solchen Verbindungen und (a7) gegebenenfalls einer Hydroxyl- und/oder Aminogruppen enthaltenden organischen Verbindung mit einem Molekulargewicht von 60 bis 399 oder einem Gemisch aus solchen Verbindungen, ein Polyurethanharz, das ein zahlenmittleres Molekulargewicht von 1.000 bis 30.000, vorzugsweise 1500 bis 20.000 aufweist und im statistischen Mittel 0,05 bis 1,1, vorzugsweise 0,2 bis 0,9 polymerisierbare Doppelbindungen enthält, hergestellt und in Wasser dispergiert wird.

Das Polyurethanharz für die Bindemittelkomponente a) kann sowohl in Substanz als auch in organischen Lösemitteln hergestellt werden.

Das Polyurethanharz für die Bindemittelkomponente a) kann durch gleichzeitige Umsetzung aller Ausgangsverbindungen hergestellt werden. In vielen Fällen ist es jedoch zweckmäßig, das Polyurethanharz stufenweise herzustellen. So ist es zum Beispiel möglich, aus den Komponenten (a1) und (a2) ein isocyanatgruppenhaltiges Präpolymer herzustellen, das dann mit der Komponente (a3) oder (a4) oder (a5) weiter umgesetzt wird. Weiter ist es möglich, aus deh Komponenten (a1) und (a2) und (a3) oder (a4) oder (a5) und gegebenenfalls (a6) ein isocyanatgruppenhaltiges Präpolymer herzustellen, das dann mit der Komponente (a7) zu einem höhermolekularen Polyurethanharz umgesetzt werden kann. Die Umsetzung mit der Komponente (a7) kann in Substanz oder - wie beispielsweise in der EP-A-297 576 beschrieben - in Wasser durchgeführt werden. In den Fällen, in denen als Komponente (a6) eine Verbindung eingesetzt wird, die nur eine gegenüber Isocyanatgruppen reaktive Gruppe enthält, kann in einer ersten Stufe aus (a2) und (a6) ein isocyanatgruppenhaltiges Vorprodukt hergestellt werden, das anschließend mit den weiteren Komponenten weiter umgesetzt werden kann.

Die Umsetzung der Komponenten (a1) bis (a7) kann auch in Gegenwart von Katalysatoren, wie z.B. Dibutylzinndilaurat, Dibutylzinnmaleat und tertiären Aminen durchgeführt werden.

Die einzusetzenden Mengen an Komponente (a1), (a2), (a3), (a4), (a5), (a6) und (a7) ergeben sich aus dem anzustreben- den zahlenmittleren Molekulargewicht und der anzustrebenden Säurezahl. Die polymerisierbaren Doppelbindungen können durch Einsatz von polymerisierbare Doppelbindungen aufweisende (a1) Komponenten und/oder polymerisierbare Doppelbindungen aufweisende (a2) Komponenten und/oder die Komponente (a6) in die Polyurethanmoleküle eingeführt werden. Es ist bevorzugt, die polymerisierbaren Doppelbindungen über die Komponente (a6) einzuführen. Außerdem ist es bevorzugt, Acrylat-, Methacrylat oder Allylethergruppen als polymerisierbare Doppelbindungen enthaltende Gruppen in die Polyurethanharzmoleküle einzuführen.

Als Komponente (a1) können gesättigte und ungesättigte Polyester- und/oder Polyetherpolyole, insbesondere Polyester- und/oder Polyetherdiole mit einem zahlenmit- tleren Molekulargewicht von 400 bis 5000 eingesetzt werden. Geeignete Polyetherdiole sind z.B. Polyetherdiole der allgemeinen Formel H(-O-(CHR¹)ₙ-)ₘOH, wobei R¹ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen) glykole im Molmassenbereich Mₙ von 400 bis 3000.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylen- glykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin und Pentaerythrit zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbon- säure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-O) aus. Hierbei ist n bevorzugt 4 bis 6 und der Substituent R² = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxy- buttersäure, Hydroxydecansäure und/oder Hydroxystearin- säure.

Für die Herstellung der Polyesterdiole wird das unsub- stituierte epsilon-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol und Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise epsilon-Caprolactam mit niedermolekularen Diolen hergestellt werden.

Wenn über die Komponente (al) polymerisierbare Doppel- bindungen in die Polyurethanmoleküle eingeführt werden sollen, dann müssen (a1) Komponenten eingesetzt werden, die polymerisierbare Doppelbindungen enthalten. Als Beispiele für solche (a1) Komponenten werden Polyesterpolyole, vorzugsweise Polyesterdiole genannt, die unter Verwendung von polymerisierbare Doppelbindungen enthaltenden Polyolen oder Polycarbonsäuren, vorzugsweise polymerisierbare Doppelbindungen enthaltenden Polyolen hergestellt worden sind. Als Beispiele für polymerisierbare Doppelbindungen enthaltende Polyole werden genannt: Trimethylolpropanmono- allylether, Glycerinmonoallylether, Pentaerythritmonound Pentaerythritdiallylether.

Als Komponente (a2) können aliphatische und/oder cyclo- aliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung.

Beispiele für cyclo- aliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandi isocyanat. Aliphatische Diisocyanate sind Verbindungen der Formel OCN- (CR³₂)ᵣ-NCO, worin r eine ganze Zahl von 2 bis 20, insbesondere 6 bis 8 ist und R³, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendi- isocyanat, Tetramethylendüsocyanat, Pentamethylendiiso- cyanat, Hexamethylendiisocyanat, Propylendiisocyanat, Ethylethylendiisocyanat, Dimethylethylendiisocyanat, Methyltrimethylendiisocyanat und Trimethylhexandiisocyanat Als weiteres Beispiel für ein aliphatisches Diisocyanat wird Tetramethylxyloldiisocyanat genannt.

Besonders bevorzugt werden als Düsocyanate Hexamethylendi- isocyanat, Isophorondüsocyanat, Tetramethylxyloldüso- cyanat und Dicyclohexylmethandiisocyanat eingesetzt.

Die Komponente (a2) muß hinsichtlich der Funktionalität der Polyisocyanate so zusammengesetzt sein, daß kein vernetztes Polyurethanharz erhalten wird. Die Komponente (a2) kann neben Diisocyanaten auch einen Anteil an Polyisocyanaten mit Funktionalitäten über zwei - wie z.B. Triisocyanate - enthalten.

Als Triisocyanate haben sich Produkte bewährt, die durch Trimerisation oder Oligomerisation von Diisocyanaten oder durch Reaktion von Diisocyanaten mit Polyolen oder Polyaminen entstehen. Hierzu gehören beispielsweise das Biuret von Hexamethylendiisocyanat und Wasser, das Isocyanurat des Hexamethylendüsocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat, 1-(1-isocyanato-1-methylethyl)-3- (1-methylethenyl) Benzol und Stearylisocyanat.

Um das in Rede stehende Polyurethanharz in Wasser stabil dispergieren zu können, muß es hydrophile Gruppen enthal- ten. Diese hydrophilen Gruppen werden durch die Komponente (a3) oder die Komponente (a4) oder die Komponente (a5) in das Polyurethanharz eingeführt. Die zur Anionenbildung befähigten Gruppen der Komponente (a3) werden vor oder während der Dispergierung des Polyurethanharzes in Wasser mit einer Base, vorzugsweise einem tertiären Amin, wie z.B. Dimethylethanolamin, Triethylamin, Tripropylamin und Tributylamin oder auch Aminomethylpropanol neutralisiert, so daß das Polyurethanharz nach der Neutralisation anionische Gruppen enthält. In dem Falle, in dem ausschließlich die Komponente (a3) als hydrophile Gruppen liefernde Komponente eingesetzt wird, wird die Komponente (a3) in einer solchen Menge eingesetzt, daß das Polyurethanharz eine Säurezahl von 15 bis 80, vorzugsweise 20 bis 60, aufweist. In dem Fall, in dem ausschließlich die Komponente (a4) als hydrophile Gruppen liefernde Komponente eingesetzt wird, wird die Komponente (a4) in einer solchen Menge eingesetzt, daß das Polyurethanharz 5 bis 40, vorzugsweise 10 bis 30 Gew.% Oxyalkylengruppen enthält, wobei evtl. durch die Komponente (a1) eingeführte Oxyalkylengruppen mit einzurechnen sind. In dem Fall, in dem die Komponente (a5) als hydrophile Gruppe liefernde Komponente eingesetzt wird, liegen die einzusetzenden Mengen an Komponente (a3) und (a4) entsprechend dem Mischungsverhältnis zwischen den oben angegebenen Werten für die Fälle, in denen die Komponente (a3) bzw. (a4) als alleiniger Lieferant für hydrophile Gruppen eingesetzt werden. Im übrigen kann der Fachmann die Mengen an einzusetzender Komponente (a3), (a4) oder (a5) problemlos durch einfache Routineversuche ermitteln. Er muß lediglich mittels einfacher Reihenversuche prüfen, wie hoch der Anteil an hydrophilen Gruppen mindestens sein muß, um eine stabile wäßrige Polyurethanharzdispersion zu erhalten. Er kann selbstverständlich auch noch allgemein übliche Dispergierhilfsmittel, wie z.B. Emulgatoren mitverwenden, um die Polyurethanharzdispersionen zu stabilisieren. Die Mitverwendung von Dispergierhilfsmitteln ist jedoch nicht bevorzugt, weil dadurch im allgemeinen die Feuchtigkeits- Empfindlichkeit der erhaltenen Lackierungen erhöht wird.

Als Komponente (a3) werden vorzugsweise Verbindungen eingesetzt, die zwei gegenüber Isocyanatgruppen reaktive Gruppen im Molekül enthalten. Geeignete gegenüber Iso- cyanatgruppen reaktive Gruppen sind insbesondere Hydroxylgruppen, sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (a3) können beispielsweise Alkansäuren mit zwei Substituenten am a-ständigen Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (a3) sind Dihydroxypropionsäure, Dihydroxybernsteinsäure und Dihydroxybenzoesäure Eine besonders bevorzugte Gruppe von Alkansäuren sind die a,a-Dimethylolalkansäuren der allgemeinen Formel R⁴-C(CH₂OH)₂COOH, wobei R⁴ für ein Wasserstoffatom oder eine Alkylgruppe mit bis zu etwa 20 Kohlenstoffatomen steht.

Beispiele für solche Verbindungen sind 2,2-Dimethylol- essigsäure, 2,2-Dimethylolpropionsäure, 2,2-Dimethylol- buttersäure und 2,2-Dimethylolpentansäure Die bevorzugte Dihydroxyalkansäure ist 2,2-Dimethylolpropionsäure. Aminogruppenhaltige Verbindungen sind beispielsweise a,W-Diaminovaleriansäure, 3,4-Diaminobenzoesäure, 2,4-Diaminotoluolsulfonsäure und 2,4-Diaminodiphenylether- sulfonsäure.

Mit Hilfe der Komponente (a4) können Poly(oxyalkylen)- gruppen als nichtionische stabilisierende Gruppen in die Polyurethanmoleküle eingeführt werden. Als Komponente (a4) können beispielsweise eingesetzt werden: Alkoxypoly(oxyalkylen)alkohole mit der allgemeinen Formel R'O-(-CH₂-CHR"-O-)ₙH, in der R' für einen Alkylrest mit 1 bis 6 Kohlenstoffatomen, R" für ein Wasserstoffatom oder einen Alkylrest mit 1 bis 6 Kohlenstoffatomen und n für eine Zahl zwischen 20 und 75 steht.

Die Komponente (a6) dient zur Einführung von polymerisier- baren Doppelbindungen in die Polyurethanharzmoleküle. Es ist bevorzugt, als Komponente (a6) eine Verbindung einzusetzen, die mindestens eine gegenüber NCO-Gruppen reaktive Gruppe und eine polymerisierbare Doppelbindung enthält. Besonders bevorzugt werden als Komponente (a6) Verbindungen eingesetzt, die neben einer polymerisierbaren Doppelbindung noch zwei gegenüber NCO-Gruppen reaktive Gruppen enthalten. Als Beispiele für gegenüber NCO-Gruppen reaktive Gruppen werden -OH, -SH, > NH und -NH₂-Gruppen genannt, wobei -OH, > NH und NH₂-Gruppen bevorzugt sind. Als Beispiele für Verbindungen, die als Komponente (a6) eingesetzt werden können, werden genannt: Hydroxy(meth)acrylate, insbesondere Hydroxyalkyl- (meth)acrylate wie Hyroxyethyl-, Hydroxypropyl-, Hydroxy- butyl- oder Hydroxyhexyl(meth)acrylat und 2,3-Dihydroxy- propyl(meth)acrylat, 2,3-Dihydroxypropylmonoallylether, 2,3-Dihydroxypropansäure-allylester, Glycerinmono(meth)- acrylat, Glycerinmonoallylether, Pentaerythritmono(meth)- acrylat, Pentaerythritdi(meth)acrylat, Pentaerythritmono- allylether, Pentaeythritdiallylether, Trimethylolpropan- monoallylether, Trimethylpropanmono(meth)acrylat und Trimethylolpropandiallylether. Als Komponente (a6) wird vorzugsweise Trimethylolpropanmonoallylether, Glycerinmono- (meth)acrylat, Pentaerythritdi(meth)acrylat, Pentaerythrit- diallyether, Glycerinmonoallylether und Trimethylolpropan- mono(meth)acrylat eingesetzt. Als Komponente (a6) werden besonders bevorzugt Trimethylolpropanmonoallylether, Glycerinmonoallylether und 2,3-Dihydroxypropansäure- allylester eingesetzt. Es ist bevorzugt, die (a6) Komponenten, die mindestens zwei gegenüber NCO-Gruppen reaktive Gruppen enthalten, kettenständig (nicht endständig) in die Polyurethanmoleküle einzubauen.

Als Komponente (a7) können beispielsweise Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentyl- glykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gewichtsprozent, vorzugsweise 2 bis 20 Gewichtsprozent, bezogen auf die eingesetzte Menge an Komponente (a1) und (a7) eingesetzt.

Als Komponente (a7) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen. Sie können Substituenten tragen, die keine mit Isocyanatgruppen reaktionsfähigen Wasserstoffatome haben. Beispiele sind Polyamine mit linearer oder verzweigter aliphatischer, cycloaliphatischer oder aromatischer Struktur und wenigstens zwei Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendi- amin-1,6, Trimethylhexamethylendiamin, Methandiamin, Isophorondiamin, 4,4'-Diaminodicyclohexylmethan und Aminoethylethanolamin. Bevorzugte Diamine sind Hydrazin, Alkyl- oder Cycloalkyldiamine wie Propylendiamine, Aminoethylethanolamin und 1-Amino-3-aminomethyl-3,5,5- trimethylcyclohexan. Es können auch Polyamine als Komponente (a7) eingesetzt werden., die mehr als zwei Aminogruppen im Molekul enthalten. In diesem Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin wird Ethylhexylamin genannt.

Als ethylenisch ungesättigte Monomere werden im Rahmen der Bindemittelkomponente a) vorzugsweise Mischungen eingesetzt, die aus 40 bis 100, vorzugsweise 60 bis 90 Gew.-% der Komponente (i), 0 bis 30, vorzugsweise 0 bis 25 Gew.-% der Komponente (ii), 0 bis 10, vorzugsweise 0 bis 5 Gew.-%, ganz besonders bevorzugt 0 Gew.-% der Komponente (iii) und 0 bis 50, vorzugsweise 0 bis 30 Gew.% der Komponente (iv) sowie 0 bis 5, vorzugsweise 0 Gew. % der Komponente (v), wobei die Summe der Gewichtsanteile von (i), (ii), (iii), (iv) und (v) stets 100 Gew. % ergibt.

Als Komponente (i) können z.B. eingesetzt werden:
Cyclohexylacrylat, Cyclohexylmethacrylat, Alkylacrylate und Alkylmethacrylate mit bis zu 20 Kohlenstoffatomen im Alkylrest, wie Z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (ii) können z.B. eingesetzt werden:
Hydroxyalkylester der Acrylsäure, Methacrylsäure oder einer anderen a,β-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (ii) werden vorzugsweise Hydroxyalkylester der Acrylsäure und Methacryl-säure, in denen die Hydroxyalkyl- gruppe bis zu 6 Kohlenstoffatome enthält, oder Mischungen aus diesen Hydroxyalkylestern eingesetzt. Als Beispiele für derartige Hydroxyalkylester werden 2-Hydroxyethylacrylat, 2-Hy-droxypropylacrylat, 2 Hydroxypropylmethacrylat, 3-Hydroxypropylacrylat, 3-Hydroxypropylmethacrylat, 2-Hydroxyethylmethacrylat, 3-Hydroxybutyl(meth)acrylat oder 4-Hydroxybutylmeth)acrylat genannt. Entsprechende Ester von anderen ungesättigten Säuren, wie z.B. Ethacrylsäure, Crotonsäure und ähnlichen Säuren mit bis zu etwa 6 Kohlenstoffatomen pro Molekül können auch eingesetzt werden.

Als Komponente (iii) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (iv) können z.B. eingesetzt werden:
vinylaromatische Kohlenwasserstoffe, wie Styrol, a-Alkylstyrol und Vinyltoluol, Acryl- und Methacrylamid und Acryl- und Methacrylnitril oder Gemische aus diesen Monomeren.

Als Komponenten (v) können Verbindungen eingesetzt werden, die mindestens zwei radikalisch polymerisierbare Doppel- bindungen im Molekül enthalten. Als Beispiele werden genannt: Divinylbenzol, p-Methyldivinylbenzol, o-Nonyldivinylbenzol, Ethandioldi(meth)acrylat, 1,4-Butandioldi- (meth)acrylat, 1,6-Hexandioldi(meth)acrylat, Trimethylol- propantri(meth)acrylat, Pentaerythritdi(meth)acrylat, Allylmethacrylat, Diallylphthalat, Butandioldivinylether, Divinylethylenharnstoff, Divinylpropylenharnstoff, Maleinsäurediallylester usw.

Als wasserunlösliche Initiatoren können beispielsweise wasserunlösliche Azoverbindungen und wasserunlösliche Peroxyverbindungen eingesetzt werden. Als Beispiele für wasserunlösliche Azoverbindungen werden 2,2-Azo-bis-(isobutyronitril), 2,2'-Azo-bis-(isovalero- nitril), 1-1'-Azo-bis-(cyclohexancarbonitril) und 2,2'-Azo-bis-(2,4-dimethylvaleronitril) genannt. Als Beispiele für wasserunlösliche Peroxyverbindungen werden t-Amylperoxyethylhexanoat, t-Butylperoxyethylhexanoat, Dilaurylperoxid, Dibenzoylperoxid und 1,1-Dimethyl-3-hydroxybutyl-(1)-peroxyethylhexanoat genannt.

Es können selbstverständlich auch Polymerisationsregler zugesetzt werden.

Die Polymerisation des ethylenisch ungesättigten Monomers bzw. der Mischung aus ethylenisch ungesättigen Monomeren der Bindemittelkomponente a) kann durchgeführt werden, indem das ethylenisch ungesättigte Monomer bzw. die Mischung aus ethylenisch ungesättigten Monomeren der wäßrigen Polyurethanharzdispersion langsam zugesetzt werden. Dabei ist es möglich, sowohl die gesamte Menge der Monomeren auf einmal zuzugeben als auch nur einen Teil vorzulegen und den Rest im Verlauf der Reaktion nachzudosieren. Die zu polymerisierenden Monomere können jedoch auch mit Hilfe eines Teils der Polyurethanharz- dispersion und Wasser in eine Präemulsion gebracht werden, die dann langsam der Vorlage zugesetzt wird. Die Zulaufzeit der zu polymerisierenden Monomere beträgt im allgemeinen 2-8, vorzugsweise etwa 3-4 Stunden. Die wasserunlöslichen Initiatoren können der Vorlage zugesetzt werden oder zusammen mit den Monomeren zugetropft werden. Sie können auch anteilsweise der Vorlage zugegeben werden, die einen Teil der Monomeren enthält. Der Rest an Initiator wird dann mit den restlichen Monomeren zudosiert. Die Reaktions- temperatur ergibt sich aus der Zerfallsgeschwindigkeit des Initiators bzw. Initiatorgemisches und kann gegebenenfalls durch geeignete organische Redoxsysteme herabgesetzt werden. Die Polymerisation des ethylenisch ungesättigten Monomers bzw. der Mischung aus ethylenisch ungesättigten Monomeren erfolgt im allgemeinen bei einer Temperatur von 30 bis 100°C, insbesondere bei einer Temperatur von 60 bis 95°C. Wenn bei Überdruck gearbeitet wird, können die Reaktionstemperaturen über 100°C ansteigen.

Das ethylenisch ungesättigte Monomer bzw. das Gemisch aus ethylenisch ungesättigten Monomeren ist so auszuwählen, daß die auf die oben beschriebene Art und Weise erhaltenen Bindemittelkomponente a) eine Hydroxylzahl von 0 - 100, vorzugsweise 0 - 80 und eine Säurezahl von 10 - 40, vorzugsweise 15 - 30 aufweisen.

Im folgenden wird nunmehr die Bindemittelkomponente b) im Detail beschrieben. Zur deren Herstellung wird zunächst in einem ersten Schritt nach gut bekannten Methoden der Polyurethanchemie ein Polyurethanharz (B) hergestellt.

Das Polyurethanharz (B) wird aus folgenden Komponenten hergestellt:(b1) ein Polyester- und/oder Polyethenpolyol mit einem zahlenmittleren Molekulargewicht von 400 bis 5000 oder ein Gemisch aus solchen Polyester- und/oder Polyetherpolyolen (b2) ein Polyisocyanat oder ein Gemisch aus Polyisocyanaten (b3) gegebenenfalls eine Verbindung, die neben einer polymenisierbaren Doppelbindung mindestens noch eine gegenüber NCO-Gruppen reaktive Gruppe enthält oder ein Gemisch aus solchen Verbindungen (b4) gegebenenfalls eine Verbindung, die mindestens eine gegenüber Isocyanatgruppen reaktive und mindestens eine zur Anionenbildung befähigte Gruppe im Molekül aufweist oder ein Gemisch aus solchen Verbindungen (b5) gegebenenfalls eine Verbindung, die mindestens eine gegenüber NCO-Gruppen reaktive Gruppe und mindestens eine Poly(oxyalkylen)gnuppe im Molekül aufweist, oder ein Gemisch aus solchen Verbindungen und gegebenen- falls (b6) eine Hydroxyl- und/oder Aminogruppen enthaltende organische Verbindung mit einem Molekulargewicht von 60 bis 600, oder ein Gemisch aus solchen Verbindungen.

Das Polyurethanharz (B) soll ein zahlenmittleres Molekular- gewicht von 200 bis 30.000, vorzugsweise 1000 bis 5000 aufweisen und im statistischen Mittel pro Molekül 0,05 bis 1,1, vorzugsweise 0,2 bis 0,9, besonders bevorzugt 0,3 bis 0,7 polymerisierbare Doppelbindungen enthalten. Es ist bevorzugt, daß das Polyuretharharz (B) eine Säurezahl von 0 bis 2,0 aufweist. Das Molekulargewicht kann - wie dem Fachmann bekannt - insbesondere durch das Mengenverhältnis und die Funktionalität der eingesetzten Ausgangsverbin- dungen (b1) bis (b6) gesteuert werden.

Das Polyurethanharze (B) kann sowohl in Substanz als auch in organischen Lösemitteln hergestellt werden.

Ein Polyurethanharz (B) kann durch gleichzeitige Umsetzung allen Ausgangsverbindungen hergestellt werden. In vielen Fällen ist es jedoch zweckmäßig, das Polyurethanharz (B) stufenweise herzustellen. So ist es zum Beispiel möglich, aus den Komponenten (b1) und (b2) ein isocyanatgruppenhaltiges Präpolymer herzustellen, das dann mit der Komponente (b3) weiter umgesetzt wird. Weiter ist es möglich, aus den Komponenten (b1), (b2), (b3) und gegebenenfalls (b4) und (b5) ein isocyanatgruppenhaltiges Präpolymer herzustellen, das dann mit der Komponente (f) zu höhermolekularen Polyurethanen umgesetzt werden kann. In den Fällen, in denen als Komponente (b3) eine Verbindung eingesetzt wird, die nur eine gegenüber Isocyanatgruppen reaktive Gruppe enthält, kann in einer ersten Stufe aus (b2) und (b3) ein isocyanatgruppenhaltiges Vorprodukt hergestellt werden, das anschließend mit den weiteren Komponenten weiter umgesetzt werden kann.

Die Umsetzung den Komponenten (b1) bis (b6) wird zweckmäßigerweise in Gegenwart von Katalysatoren wie z.B. Dibutylzinndilaunat, Dibutylzinnmaleat, tertiäre Amine usw. durchgeführt.

Die einzusetzenden Mengen an Komponente (b1), (b2), (b3), (b4), (b5) und (b6) ergeben sich aus dem anzustrebenden zahlenmittleren Molekulargewicht und der anzustrebenden Säurezahl. Die polymerisierbaren Doppelbindungen können durch Einsatz von polymerisierbare Doppelbindungen aufweisende (b1) Komponenten und/oder die Komponente (b3) in die Polyurethanmoleküle eingeführt werden. Es ist bevorzugt, die polymerisierbanen Doppelbindungen über die Komponente (b3) einzuführen.

Als Komponente (b1) können die Verbindungen, wie zu der Komponente (a1) des Polyurethanharzes der Bindemittel- komponente a) erläutert eingesetzt werden. Alle zur Komponente (a1) getroffenen Ausführungen gelten ent- sprechend. Gleiches gilt für die Komponente (b2) im Verhältnis zur Komponente (a2), für die Komponente (b3) im Verhältnis zur Komponente (a6), für die Komponente (b4) im Verhältnis zur Komponente (a3), für die Komponente (b5) im Verhältnis zur Komponente (a4) und für die Komponente (b6) im Verhältnis zur Komponente (a7).

Auch die in der Bindemittelkomponente b) einsetzbaren ethylenisch ungesättigten Monomeren (A) entsprechen qualitativ jenen wie zur Bindemittelkomponente a) beschrieben. Im einzelnen sind jedoch andere Mengenver- hältnisse bevorzugt. Bevorzugt werden im Falle der Bindemittelkomponente b) Mischungen eingesetzt, wobei die Komponente (i) in einer Menge von 40 bis 100, vorzugsweise 60 bis 90 Gew.-%, die Komponente (ii) in einer Menge von 0 bis 20, vorzugsweise 3 bis 12 Gew.-%, die Komponente (iii) in einer Menge von 0 bis 30, vorzugsweise 5 bis 15 Gew.-%, die Komponente (iv) in einer Menge von 0 bis 30, vorzugsweise 0 bis 10 Gew.-% und die Komponente (v) in einer Menge von 0 bis 5, vorzugsweise 0 Gew.-%, eingesetzt wird, wobei die Summe der Gewichtsanteile von (i) bis (v) stets 100 Gew.-% ergibt.

In Hinblick auf die Komponente (v) wird bei der Bindemittelkomponente b) der Einsatz von difunktionellen ungesättigten Monomeren wie Butandioldiacrylat oder Hexandioldiacrylat bevorzugt. Bei Verwendung von Glycidylmethacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Löesemittel) sorgfältig abzustimmen, um keine Gelierung zu erhalten. Die zugesetzte Menge an polyungesättigten Monomeren dient dazu, ohne Gelbildungen die mittlere Molmasse anzuheben. Bevorzugt ist es jedoch, kein polyungesättigtes Monomeres zuzusetzen.

Eine Bindemittelkomponente b) wird hergestellt, indem eine Lösung des Polyurethanharzes (B) in einem organischen Lösemittel bzw. einem organischen Lösemittelgemisch bereitgestellt wird und in dieser Lösung ethylenisch ungesättigte Monomere oder ein Gemisch ethylenisch ungesättigter Monomere in einer radikalischen Polymerisation polymerisiert werden und das so erhaltene Reaktionsprodukt in eine wäßrige Dispersion überführt wird. Es ist bevorzugt, wasser-mischbare organische Lösemittel einzusetzen. Als Beispiele für brauchbare Lösemittel werden Butylglykol, 2-Methoxypropanol, n-Butanol, Methoxybutanol, n-Propanol, Ethylenglykolmonomethylether, Ethylenglykol- monoethylether, Ethylenglykolmonobutylether, Diethylen- glykolmonomethylether, Diethylenglykolmonoethylether, Diethylenglykoldiethylether, Diethylenglykolmonobutylether und 3-Methyl-3-methoxybutanol oder Mischungen aus diesen Lösemitteln genannt. Bevorzugt werden Ketone, wie z.B. Aceton, Methylethylketon, Diethylketon und Methylisobutylketon.

Die radikalische Polymerisation wird bei Temperaturen von 80 bis 160°C, vorzugsweise 100 bis 160°C in den oben genannten organischen Lösemitteln bzw. Lösemittelgemischen durchgeführt. Als Beispiele für brauchbare Polymerisationsinitiatoren werden freie Radikale bildende Ini- tiatoren, wie Z.B. Benzoylperoxid, Azobisisobutyronitril und Butylperoxyethylhexanoat genannt. Bei der Polymerisa- tion kommt es auch zu Pfropfungsreaktionen zwischen dem Polyurethanharz (B) und der Komponente (A).

Die erfindungsgemäß eingesetzten, aus (A) und (B) hergestellten Polymere müssen zur Anionenbildung befähigte Gruppen enthalten, die vor oder während der Überführung der Polymere aus dem organischen Lösemittel bzw. Lösemittelgemisch in Wasser neutralisiert werden und die Bildung stabiler wäßriger Dispersionen ermöglichen. Die in Rede stehenden Polymere können neben den zur Anionenbildung befähigten Gruppen auch noch nichtionische stabilisierende Gruppen wie z.B. Poly(oxyalkylen) gruppen, insbesondere Poly(oxyethylen)-und/oder Poly(oxypropylen)- und/oder Poly(oxyethylen)(oxypropylen)gruppen enthalten.

Die Menge der eingesetzten, zur Anionenbildung befähigten Gruppen soll so hoch sein, daß die Polymere der Binde- mittelkomponente b) eine Säurezahl von 5 bis 200, vorzugs- weise 10 bis 40, besonders bevorzugt 15 bis 30 aufweisen. Die Einführung der zur Anionenbildung befähigten Gruppen in die in Rede stehenden Polymere kann beispielsweise über die Komponenten (b4) und (iii) erfolgen. Die zur Anionenbildung befähigten Gruppen können ausschließlich in der Komponente (A) oder ausschließlich in der Komponente (B) oder sowohl in der Komponente (A) als auch in der Komponente (B) enthalten sein. Es ist bevorzugt, daß 50 bis 100, vorzugs- weise 70 bis 100, besonders bevorzugt 100% der zur Anionen- bildung befähigten Gruppen in der Komponente (A) enthalten sind.

Die Einführung von Poly(oxyalkylen)gruppen in die Polymere der Bindemittelkomponente b) kann über die Komponente (b5) oder über ethylenisch ungesättigte Monomere, die mindestens eine Poly(oxyalkylen)gruppe enthalten (z.B. Poly- (oxyethylen)(meth)acrylate) erfolgen. Die Polymere sollten keine übermäßigen Mengen an Poly(oxyalkylen)gruppen enthalten, weil sonst die Feuchtigkeitsbeständigkeit der Lackfilme herabgesetzt werden kann. Der Gehalt an Poly(oxyalkylen)gruppen kann bei 1 bis 10 Gew.-%, vorzugsweise 1 bis 5 Gew.-% (bezogen auf das Gewicht des aus (A) und(B) hergestellten Polymers) liegen.

Die eingesetzten, aus (A) und (B) hergestellten Polymere sollten vorzugsweise keine nichtionischen stabilisierenden Gruppen enthalten.

Die aus (A) und (B) hergestellten Polymere sollen vorzugsweise eine Hydroxylzahl von 0 bis 100, besonders bevorzugt 20 bis 80 aufweisen. Das zahlenmittlere Molekulargewicht der Polymere soll vorzugsweise 2000 bis 20.000, besonders bevorzugt 5000 bis 12.000 betragen.

Besonders bevorzugte Polymere sind die aus (A) und (B) hergestellten Polymere, die einen Polymolekularitätsindex Q von 5 bis 90, vorzugsweise 10 bis 30 aufweisen. Der Polymolekularitätsindex ist der Quotient M_{w} : Mₙ, wobei M_{w} für das gewichtsmittlere und Mₙ für das zahlenmittlere Molekulargewicht stehen.

Der Polymolekularitätsindex kann beispielsweise durch gezielten Einsatz von Reglern und die Art der eingesetzten Lösemittel beeinflußt werden. Außerdem wird Q durch den in der Komponente (B) enthaltenen Gehalt an polymerisierbaren Doppelbindungen beeinflußt. Q wird größer, je kleiner die Menge an eingesetztem Regler und die Menge an eingesetzten Lösemitteln, die als Regler fungieren können, ist. Je geringer der Gehalt an polymerisierbaren Doppelbindungen in der Komponente (B) ist, desto größer wird Q. Q kann bestimmt werden durch Gelpermeationschromatographie unter Verwendung eines Polystyrolstandards.

Nach Beendigung der Polymerisation der Komponente (A) wird das erhaltene Polymer zumindest teilweise neutralisiert und in Wasser dispergiert.

Zur Neutralisation können sowohl organische Basen als auch anorganische Basen, wie Ammoniak und Hydrazin, verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropyl- amin und Tributylamin oder auch Aminomethylpropanol.

Aus den erhaltenen wäßrigen Bindemitteldispersionen der Bindemittelkomponente b) kann gegebenenfalls ein Teil oder vorzugsweise das gesamte organische Lösemittel abdestilliert werden. Die Bindemitteldispersionen b) enthalten Polymerteilchen, deren mittlere Teilchengröße zwischen 10 und 500 nm, vorzugsweise zwischen 60 bis 150 nm liegt (Meßmethode: Laserlichtstreuuung, Meßgerät: Malvern Autosizer 2 C).

Aus einer erfindungsgemäßen Bindemitteldispersion mit den Bindemittelkomponenten a) und b) können nach allgmein gut bekannten Methoden wäßrige Lacke, insbesondere wäßrige Uni- und wäßrige Metallic-Basislacke hergestellt werden. Die Basislacke sind auch für Reparaturzwecke verwendbar und können sowohl mit wäßrigen als auch mit konventionellen Klarlacken, Pulverlacken und Pulverslurrylacken überlackiert werden.

Erfindungsgemäße Lacke können neben den Bindemittel- komponenten a) und b) noch weitere verträgliche wasserverdünnbare Kunstharze, wie z.B. Aminoplastharze, Polyurethanharze, Polyacrylatharze, Polyester und Polyether enthalten.

Erfindungsgemäße Lacke enthalten vorzugsweise 5 bis 90, besonders bevorzugt 40 bis 70 Gew.-% an Bindemittel- komponente a) plus Bindemittelkomponente b), wobei die Gewichtsprozentangaben auf den Gesamtfeststoffgehalt der Basislacke bezogen sind.

Als Pigmente können erfindungsgemäße Basislacke farbgebende Pigmente auf anorganischer Basis, wie z.B. Titandioxid, Eisenoxid, Ruß usw., farbgebende Pigmente auf organischer Basis sowie übliche Metallpigmente (z.B. handelsübliche Aluminiumbronzen, Edelstahlbronzen...) und nicht metal- lische Effektpigmente (z.B. Perlglanz bzw. Interferenz- pigmente) enthalten. Die Pigmentierungshöhe liegt in üblichen Bereichen. Ein besonderer Vorteil des erfmdungs- gemäß eingesetzten Bindemittels b) besteht darin, daß es auch als Anreibeharz eingesetzt werden kann und sehr stabile Pigmentpasten liefert.

Weiterhin können erfindungsgemäßen Lacken vernetzte polymere Mikroteilchen, wie sie z.B. in der EP-A-0038127 offenbart sind, und/oder übliche anorganische oder organische Additive zugesetzt werden. So wirken als Verdicker beispielsweise anorganische Schichtsilikate, wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acryl- amid, Poly(meth)acrylsäure, Polyvinylpyrrolidon, Styrol-Maleinsäureanhydrid oder Ethylen-Maleinsäureanhydrid-copolymere und ihre Derivate oder auch hydrophob modifizierte ethoxylierte Urethane oder Polyacrylate sowie carboxylgruppenhaltige Polyacrylat-Copolymere mit einer Säurezahl von 60 bis 780, bevorzugt 200 bis 500.

Erfindungsgemäße Basislacke weisen im allgemeinen einen Festkörpergehalt von etwa 15 bis 50 Gew.-% auf. Der Festkörpergehalt variiert mit dem Verwendungszweck der Beschichtungszusammensetzungen. Für Metalliclacke liegt er beispielsweise bevorzugt bei 17 bis 25 Gew.-%. Für unifarbige Lacke liegt er höher, beispielsweise bei 30 bis 45 Gew.-%. Die erfindungsgemäßen Lacke können zusätzlich übliche organische Lösemittel enthalten. Deren Anteil wird möglichst gering gehalten. Er liegt beispielsweise unter 15 Gew.-%.

Erfindungsgemäße Lacke werden im allgemeinen auf einen pH-Wert zwischen 6,5 und 9,0 eingestellt. Der pH-Wert kann mit üblichen Aminen, wie z.B. Ammoniak, Triethylamin, Dimethylaminoethanol, N-Methylmorpholin und Aminomethylpropanol eingestellt werden.

Erfindungsgemäße Basislacke können mit wäßrigen, konven- tionellen Lacken, Pulverklarlacken oder Pulverslurrylacken überlackiert werden.

Mit erfindungsgemäßen Basislacken können auch ohne Über- lackierung mit einem transparenten Decklack qualitativ hochwertige Lackierungen hergestellt werden. Die so erhaltenen einschichtigen Lackierungen zeichnen sich insbesondere durch einen hohen Glanz, gute mechanisch- technologische Eigenschaften und hohe Schwitzwasserbe- ständigkeit aus.

Erfindungsgemäße wäßrige Lacke können auf beliebige Substrate, wie z.B. Metall, Holz, Kunststoff oder Papier aufgebracht werden. Der Auftrag kann direkt erfolgen oder, wie in der Autoindustrie üblich, nach Aufbringen einer Elektrotauchgrundierung und eines Füllers. Die erfindungsgemäßen Lacke können durch Spritzen, Rakeln, Tauchen, Walzen, vorzugsweise durch elektrostatisches und pneumatisches Spritzen appliziert werden.

In den folgenden Beispielen wird die Erfindung näher erläutert. Alle Angaben zu Prozenten und Teilen sind Gewichtsangaben, wenn nicht ausdrücklich etwas anderes angegeben wird.

### Beispiel 1: wäßrige Dispersion der Bindemittelkomponente a)

In einem Reaktionsgefäß mit Rührer und Rückflußkühler werden 173,3 g eines Polyesterdiols mit einem zahlen- mittleren Molekulargewicht von 1480 auf Basis einer Dimerfettsäure (Pripol^{R} 1013), Isophthalsäure und Hexandiol nach Zusatz von 20,2 g Dimethylolpropionsäure und 7,2 g Trimethylolpropanmonoallylether in 43,3 g NMethylpyrrolidon und 78,5 g Methylethylketon gelöst. Nach Zugabe von 88,1 g Isophorondiisocyanat wird auf 80 °C erwärmt und bei dieser Temperatur gehalten bis der NCO-Gehalt 1,8 % beträgt. Nach Abkühlen auf 50 °C werden schnell hintereinander unter Rühren 14,4 g Triethylamin, 567,6 g entionisiertes Wasser und 7,3 g Aminoethylethanolamin zugegeben. Anschließend wird die Temperatur auf 60 °C erhöht und das Methylethylketon im Vakuum abdestilliert. Die so erhaltene Polyurethandispersion weist einen Feststoffgehalt von 34 % und einen pH-Wert von 8,2 auf.

437,5 g dieser Polyurethandispersion werden mit 275,7 g entionisiertem Wasser verdünnt. Nach Erwärmen auf 85 °C wird eine Präemulsion aus 50,1 g Methylmethacrylat, 50,1 g Styrol, 37,5 g n-Butylacrylat, 37,5 g Hydroxyethylmethacrylat und 77,2 g der oben hergestellten Polyurethan- dispersion innerhalb von 2,5 Stunden unter Rühren zugegeben. Mit Beginn der Zugabe dieser Mischung wird eine Lösung von 2,6 g t-Butylperethylhexanoat in 32,0 g Methoxypropanol innerhalb von drei Stunden zugegeben. Anschließend wird so lange bei 85 °C gehalten bis die Monomeren vollständig abreagiert sind. Gegebenenfalls wird Initiator nachgegeben. Die so erhaltene Dispersion zeigt bei sehr geringem Koagulatanteil eine ausgezeichnete Stabilität bei einem Feststoffgehalt von 35 % und einem pH-Wert von 7,2.

### Beispiel 2: wäßrige Dispersion der Bindemittelkomponente b)

In einem Reaktionsgefäß mit Rührer, Rückflußkühler und zwei Zulaufgefäßen werden zu einer Mischung aus 77,6 g eines Polyesterdiols mit einem zahlenmittleren Molekulargewicht von 630 auf Basis Adipinsäure, Hexandiol und Neopentyl- glykol 9,3 g Neopentylglykol, 3,0 g Trimethylolpropanmonoallylether, 0,1 g Dibutylzinndilaurat, 110,2 g Methylisobutylketon und 63,5 g Isophorondiisocyanat gegeben. Das Reaktionsgemisch wird anschließend auf 105 °C erhitzt. Bei einem NCO-Gehalt von 1,8% werden 15,1 g Trimethylolpropan zu dem Reaktionsgemisch gegeben und die Reaktion weitergeführt bis keine Isocyanatgruppen mehr nachgewiesen werden können.

Bei einer Temperatur von 105 °C wird anschließend ein Gemisch aus 69,6 g n-Butylacrylat, 69,6 g Methylmethacrylat, 16,6 g Hydroxyproylmethacrylat und 13,0 g Acrylsäure innerhalb von drei Stunden zu dem Reaktionsgemisch gegeben. Gleichzeitig werden 5,1 g t-Butylperoxyethylhexanoat gelöst in 42,8 g Methyisobutylketon innerhalb von 3,5 Stunden zudosiert.

Nach weiteren 2,5 Stunden bei 105 °C wird das Reaktions- gemisch auf 90 °C abgekühlt. Anschließend werden 10,6 g Dimethylethanolamin und 483,2 entionisiertes Wasser zugegeben.

Nach Entfernung des Methylisobutylketons im Vakuum erhält man eine stabile 42 %ige wäßrige Dispersion mit einem pH-Wert von 7,9.

### Beispiel 3: Uni-Wasserbasislack

200 g Bindemittelkomponente b) gemäß Beispiel 2 werden mit 4 g Surfynol^{R} 104 (2,4,7,9- Tetramethyl-5-decyn-4, 7-diol), 50 g entionisiertem Wasser, 40 g Butyldiglykol, 3 g eines handelsüblichen Entschäumers und 250 g eines Weißpigmentes (Titandioxid) im Dissolver 15 min lang bei 21 m/s vordispergiert und anschließend 30 min auf einer Perlmühle bei max. 50 °C vermahlen.

Zu 547 g des oben beschriebenen Mahlgutes werden 250 g der Bindemittelkomponente a), 53 g eines handelsüblichen Melaminharzes, 30 g Butylglykol, 20 g Shellsol^{R} T (Kohlenwasserstoffgemisch, aliphatisch, im Bereich C11-C13 (Isoparaffine)), 20 g N-Methylpyrrolidon, 10 g 2-Ethylhexanol sowie 70 g entionisiertes Wasser unter Rühren hinzugefügt. Anschließend wird der pH-Wert des Basislackes mit Dimethylethanolamin auf 8,3 eingestellt.

Beispiel 4: Vergleich einer mittels des Lackes nach Beispiel 3 erhaltenen Lackierung mit Lackierungen auf Basis jeweils nur einer der Bindemittelkomponenten a) oder b)

Ein Lack gemäß Beispiel 3 wurde durch elektrostatisches Verspritzen auf ein Substrat aus zinkphosphatiertem Karosserieblech, welches mit einem handelüblichen Elektrotauchlack und einem handelsüblichen Füller beschichtet war, aufgetragen, wobei eine eine Trockenfilmdicke von ca. 12 bis 30µm erhalten wurde. Nach kurzer Abdunstzeit wurde mit einem handelsüblichen Klarlack überlackiert und 30 min. bei 130 °C eingebrannt. Es wurde eine Lackierung mit gutem Verlauf erhalten.

Auf der Basis der Bindemittelkomponenten a) und b) wurden korrespondierende Lacke hergestellt. Hierzu wird im einzelnen auf die Literaturstellen DE 4010176 und DE P 4339870.7 verwiesen. Mit den so erhaltenen Lacken wurden jeweils Lackierungen in der vorstehend beschriebenen Weise hergestellt.

Eine vergleichende Untersuchung der mechanischen Eigenschaften der so erhaltenen Lackierungen zeigte, daß eine mit einem erfindungsgemäßen Lack hergestellte Lackierung eine beachtlich höhere Steinschlagfestigkeit (meßbar beispielsweise mittels Beschuß mit 1000 g kantigem Hartgußstrahlmittel, 4-5mm Durchmesser, in einem Erichsen Steinschlaggerät 508 nach VDA) aufweist als die Vergleichslackierungen auf Basis von Lacken mit jeweils nur einer der Bindemittelkomponenten a) oder b).

Ein wie oben lackiertes Blech wurde nochmals mit einem erfindungsgemäßen Lack nach Beispiel 3) und nach kurzer Abdunstzeit mit einem handelsüblichen Klarlack überlackiert und 30 min. bei 130 °C eingebrannt (high bake Reparatur) bzw. nach kurzer Ablüftzeit mit einem handelsüblichen 2K Reparaturklarlack überlackiert und 40 min. bei 80 °C getrocknet (low bake Reparatur). Eine vergleichende Untersuchung der mechanischen Eigenschaften der so erhaltenen Reparaturaufbauten zu Vergleichslackierungen auf Basis der Bindemittel a) bzw. b) allein zeigte ebenfalls eine deutlich bessere Haftung der mit dem erfindungsgemäßen Lack hergestellten Lackierung.

## Patentansprüche

1. Wäßriger Lack, **dadurch gekennzeichnet, daß** er 5 - 95 Gew.-% (bezogen auf den gesamten Bindemittelgehalt) einer Bindemittelkomponente a) und 5 - 95 Gew.-% (bezogen auf den gesamten Bindemittelgehalt) einer Bindemittelkomponente b) enthält, wobei die Bindemittelkomponente a) erhältlich ist, indem in einer wäßrigen Dispersion eines Polyurethanharzes, das ein zahlenmittleres Molekulargewicht von 1.000 bis 30.000 aufweist und im statistischen Mittel pro Molekül 0,05 bis 1,1 polymerisierbare Doppelbindungen enthält, ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren radikalisch polymerisiert wird, wobei das Gewichtsverhältnis zwischen dem Polyurethanharz und dem ethylenisch ungesättigten Monomeren bzw. dem Gemisch aus ethylenisch ungesättigten Monomeren zwischen 1:10 und 10:1 liegt, und wobei die Bindemittelkomponente b) erhältlich ist, indem in einem organischen Lösemittel oder in einem Gemisch organischer Lösemittel
(A) ethylenisch ungesättigte Monomere oder ein Gemisch ethylenisch ungesättigter Monomere in Gegenwart
(B) eines Polyurethanharzes, das ein zahlenmittleres Molekulargewicht von 200 bis 30.000 aufweist und das im statistischen Mittel pro Molekül 0,05 bis 1,1 polymerisierbare Doppelbindungen enthält,
(B) eines Polyurethanharzes, das ein zahlenmittleres Molekulargewicht von 200 bis 30.000 aufweist und das im statistischen Mittel pro Molekül 0,05 bis 1,1 polymerisierbare Doppelbindungen enthält,
polymerisiert werden und die so erhaltene Bindemittel- komponente b) in eine wäßrige Dispersion überführt wird.

2. Wäßriger Lack nach Anspruch 1, **dadurch gekennzeichnet, daß** das Polyurethanharz der Bindemittelkomponente a) Acrylat-, Methacrylat- und/oder Allylethergruppen als polymerisierbare Doppelbindungen enthaltende Gruppen enthält.

3. Wäßriger Lack nach einem der Ansprüche 1 oder 2, **dadurch gekennzeichnet, daß** das Polyurethanharz der Bindemittelkomponente a) anionisch ist und eine Säurezahl von 20 bis 60 aufweist.

4. Wäßriger Lack nach einem der Ansprüche 1 bis 3, **dadurch gekennzeichnet, daß** als ethylenisch ungesättigte Monomere der Bindemittelkomponente a) ein Gemisch aus
(i) 40 bis 100 Gew.-% eines aliphatischen oder cycloaliphatischen Esters der Acrylsäure oder Methacrylsäure, der weder Hydroxyl- noch Carboxylgruppen enthält oder eines Gemisches aus solchen Estern,
(ii) 0 bis 30 Gew.-% eines mindestens eine Hydroxylgruppe im Molekül tragenden ethylenisch ungesättigten Monomeren oder eines Gemisches aus solchen Monomeren,
(iii) 0 bis 10 Gew.-% eines mindestens eine Carboxylgruppe im Molekül tragenden ethylenisch ungesättigten Monomeren oder eines Gemisches aus solchen Monomeren,
(iv) 0 bis 50 Gew.-% eines von (i), (ii) und (iii) verschiedenen ethylenisch ungesättigten Monomeren oder eines Gemisches aus solchen Monomeren und
(v) 0 bis 5 Gew.-% eines ethylenisch polyungesättigten Monomeren oder eines Gemisches aus solchen Monomeren,
eingesetzt werden, wobei die Summe der Gewichtsanteile von (i), (ii), (iii), (iv) und (v) stets 100 Gew.-% ergibt.

5. Wäßriger Lack nach einem der Ansprüche 1 bis 4, **dadurch gekennzeichnet, daß** das aus (A) und (B) hergestellte Polymer der Bindemittelkomponente b) eine Säurezahl von 5 bis 200, vorzugsweise 10 bis 40, besonders bevorzugt 15 bis 30, eine Hydroxylzahl von 0 bis 100, vorzugsweise 20 bis 80 und ein zahlenmittleres Molekulargewicht von 2000 bis 20.000, vorzugsweise 5000 bis 12.000 aufweist.

6. Wäßriger Lack nach einem der Ansprüche 1 bis 5, **dadurch gekennzeichnet, daß** das aus (A) und (B) hergestellte Polymer der Bindemittelkomponente b) einen Polymolekularitätsindex Q = M_{W} : Mₙ von 5 bis 90, bevorzugt 10 bis 30 aufweist.

7. Wäßriger Lack nach einem der Ansprüche 1 bis 6, **dadurch gekennzeichnet, daß** das Polymer der Bindemittelkomponente b) erhältlich ist, indem die Komponenten (A) und (B) in einem Gewichtsverhältnis von 1 : 10 bis 10 : 1, vorzugsweise 1 : 2 bis 2 : 1, besonders bevorzugt 1 : 1 eingesetzt werden.

8. Wäßriger Lack nach einem der Ansprüche 1 bis 7, **dadurch gekennzeichnet, daß** als Komponente(B) der Bindemittelkomponente b) ein Polyurethanharz eingesetzt wird, das polymerisierbare Doppelbindungen enthält, die durch Einbau von Verbindungen, die neben einer polymerisierbaren Doppelbindung mindestens noch zwei gegenüber NCO-Gruppen reaktive Gruppen enthalten, in die Moleküle des Polyurethanharzes eingeführt worden sind.

9. Wäßriger Lack nach einem der Ansprüche 1 bis 8, **dadurch gekennzeichnet, daß** als Komponente (B) der Bindemittelkomponente b) ein Polyurethanharz eingesetzt wird, das Allylethergruppen als polymerisierbare Doppelbindungen enthält.

10. Wäßriger Lack nach einem der Ansprüche 1 bis 10, **dadurch gekennzeichnet, daß** als Komponente (B) der Bindemittelkomponente b) ein Polyurethanharz eingesetzt wird, das Trimethylolpropanmonoallylether eingebaut enthält.

11. Wäßriger Lack nach einem der Ansprüche 1 bis 10, **dadurch gekennzeichnet, daß** das Polymer der Bindemittelkomponente b) erhältlich ist, indem als Komponente (B) ein Polyurethanharz eingesetzt wird, das eine Säurezahl von 0 bis 2,0 aufweist.

12. Wäßriger Lack nach einem der Ansprüche 1 bis 11, **dadurch gekennzeichnet, daß** das Polymer der Bindemittelkomponente b) erhältlich ist, indem als Komponente (B) ein Polyurethanharz eingesetzt wird, das ein zahlenmittleres Molekulargewicht von 1000 bis 5000 aufweist und im statistischen Mittel pro Molekül 0,2 bis 0,9, bevorzugt 0,3 bis 0,7, polymerisierbare Doppelbindungen enthält.

13. Wäßriger Lack nach einem der Ansprüche 1 bis 12, **dadurch gekennzeichnet, daß** er Pigmente, insbesondere Uni-Farbpigmente, enthält.

14. Verwendung eines wäßrigen Lackes nach einem der Ansprüche 1 bis 13 als pigmentierter Basislack in einem Verfahren zur Herstellung einer zweischichtigen Lackierung auf einer Substratoberfläche, wobei
(1) der Basislack auf die Substratoberfläche aufgebracht wird,
(2) aus dem in Stufe (1) aufgebrachten Basislack ein Polymerfilm gebildet wird,
(3) auf der so erhaltenen Basislackschicht ein transparenter Decklack aufgebracht wird und anschließend
(4) die Basislackschicht zusammen mit der Decklackschicht eingebrannt wird.

15. Verwendung eines wäßrigen Lackes nach einem der Ansprüche 1 bis 13 zur Lackierung von Kraftfahrzeug- Karosserien oder Kraftfahrzeug-Karosserieteilen.

## Claims

1. An aqueous coating material which comprises 5 - 95% by weight (based on the overall binder content) of a binder component a) and 5 - 95% by weight (based on the overall binder content) of a binder component b), the binder component a) being obtainable by subjecting an ethylenically unsaturated monomer or a mixture of ethylenically unsaturated monomers to free-radical polymerization in an aqueous dispersion of a polyurethane resin which has a number-average molecular weight of from 1000 to 30,000 and contains on average from 0.05 to 1.1 polymerizable double bonds per molecule and in the presence of a water-insoluble initiator or of a mixture of water-insoluble initiators, the weight ratio between the polyurethane resin and the ethylenically unsaturated monomer or mixture of ethylenically unsaturated monomers being between 1:10 and 10:1, and the binder component b) being obtainable by subjecting
(A) an ethylenically unsaturated monomer or a mixture of ethylenically unsaturated monomers to polymerization in an organic solvent or in a mixture of organic solvents and in the presence of
(B) a polyurethane resin having a number-average molecular weight of from 200 to 30,000 and containing on average from 0.05 to 1.1 polymerizable double bonds per molecule and converting the resulting binder component b) into an aqueous dispersion.

2. An aqueous coating material as claimed in claim 1, wherein the polyurethane resin of the binder component a) comprises acrylate, methacrylate and/or allyl ether groups as groups containing polymerizable double bonds.

3. An aqueous coating material as claimed in either of claims 1 and 2, wherein the polyurethane resin of the binder component a) is anionic and has an acid number of from 20 to 60.

4. An aqueous coating material as claimed in one of claims 1 to 3, wherein as ethylenically unsaturated monomers of the binder component a) a mixture of
(i) from 40 to 100% by weight of an aliphatic or cycloaliphatic ester of acrylic acid or methacrylic acid containing neither hydroxyl nor carboxyl groups, or a mixture of such esters,
(ii) from 0 to 30% by weight of an ethylenically unsaturated monomer which carries at least one hydroxyl group in the molecule, or a mixture of such monomers,
(iii) from 0 to 10% by weight of an ethylenically unsaturated monomer which carries at least one carboxyl group in the molecule, or a mixture of such monomers,
(iv) from 0 to 50% by weight of an ethylenically unsaturated monomer other than (i), (ii) and (iii), or a mixture of such monomers, and
(v) from 0 to 5% by weight of an ethylenically polyunsaturated monomer or a mixture of such monomers,
is used, the sum of the weight fractions of (i), (ii), (iii), (iv) and (v) always being 100% by weight.

5. An aqueous coating material as claimed in one of claims 1 to 4, wherein the polymer of the binder component b), which is prepared from (A) and (B), has an acid number of from 5 to 200, preferably from 10 to 40, with particular preference from 15 'to 30, a hydroxyl number of from 0 to 100, preferably from 20 to 80, and a number-average molecular weight of from 2000 to 20,000, preferably from 5000 to 12,000.

6. An aqueous coating material as claimed in one of claims 1 to 5, wherein the polymer of the binder component b) which is prepared from (A) and (B) has a polydispersity index Q = M_{w} : Mₙ of from 5 to 90, preferably from 10 to 30.

7. An aqueous coating material as claimed in one of claims 1 to 6, wherein the polymer of the binder component b) is obtainable using components (A) and (B) in a weight ratio of from 1 : 10 to 10 : 1, preferably from 1 : 2 to 2 : 1, with particular preference 1 : 1.

8. An aqueous coating material as claimed in one of claims 1 to 7, wherein as component (B) of the binder component b) a polyurethane resin is used containing polymerizable double bonds which have been introduced by incorporating compounds containing not only a polymerizable double bond but also at least two NCO-reactive groups into the molecules of the polyurethane resin.

9. An aqueous coating material as claimed in one of claims 1 to 8, wherein as component (B) of the binder component b) a polyurethane resin is used which comprises allyl ether groups as polymerizable double bonds.

10. An aqueous coating material as claimed in one of claims 1 to 9, wherein as component (B) of the binder component b) a polyurethane resin is used which comprises trimethylolpropane monoallyl ether incorporated.

11. An aqueous coating material as claimed in one of claims 1 to 10, wherein the polymer of the binder component b) is obtainable using as component (B) a polyurethane resin which has an acid number of from 0 to 2.0.

12. An aqueous coating material as claimed in one of claims 1 to'11, wherein the polymer of the binder component b) is obtainable using as component (B) a polyurethane resin which has a number-average molecular weight of from 1000 to 5000 and contains on average from 0.2 to 0.9, preferably from 0.3 to 0.7, polymerizable double bonds per molecule.

13. An aqueous coating material as claimed in one of claims 1 to 12, which comprises pigments, especially solid-color pigments.

14. The use of an aqueous coating material as claimed in one of claims 1 to 13 as the pigmented basecoat in a process for producing a two-coat paint system on a substrate surface, in which
(1) the basecoat is applied to the substrate surface,
(2) a polymer film is formed from the basecoat applied in step (1),
(3) a transparent topcoat is applied to the resulting basecoat film, and subsequently
(4) the basecoat film is baked together with the topcoat film.

15. The use of an aqueous coating material as claimed in one of claims 1 to 13 for coating motor vehicle bodies or motor vehicle bodywork parts.

## Revendications

1. Peinture à l'eau, **caractérisée en ce qu'**elle contient de 5 à 95 % en poids (par rapport à la teneur totale en liant) d'un composant de liant a) et de 5 à 95 % en poids (par rapport à la teneur totale en liant) d'un composant de liant b), le composant de liant a) pouvant être obtenu par polymérisation radicalaire, dans une dispersion aqueuse d'une résine polyuréthanne qui présente une masse moléculaire moyenne en nombre de 1 000 à 30 000 et comporte en moyenne statistique par molécule de 0,05 à 1,1 double liaison polymérisable, d'un monomère à insaturation éthylénique ou d'un mélange de monomères à insaturation éthylénique, en présence d'un amorceur insoluble dans l'eau ou d'un mélange d'amorceurs insolubles dans l'eau, le rapport pondéral entre la résine polyuréthanne et le monomère à insaturation éthylénique ou le mélange de monomères à insaturation éthylénique étant compris entre 1:10 et 10:1, et le composant de liant b) pouvant être obtenu par polymérisation, dans un solvant organique ou dans un mélange de solvants organiques,
(A) de monomères à insaturation éthylénique ou d'un mélange de monomères à insaturation éthylénique en présence de
(B) une résine polyuréthanne qui présente une masse moléculaire moyenne en nombre de 200 à 30 000 et qui comporte en moyenne statistique par molécule de 0,05 à 1,1 double liaison polymérisable, et le composant de liant b) ainsi obtenu est converti en une dispersion aqueuse.

2. Peinture à l'eau selon la revendication 1, **caractérisée en ce que** la résine polyuréthanne du composant de liant a) contient des groupes acrylate, méthacrylate et/ou allyléther en tant que groupes contenant des doubles liaisons polymérisables.

3. Peinture à l'eau selon la revendication 1 ou 2, **caractérisée en ce que** la résine polyuréthanne du composant de liant a) est anionique et présente un indice d'acide de 20 à 60.

4. Peinture à l'eau selon l'une quelconque des revendications 1 à 3,
**caractérisée en ce qu'**on utilise en tant que monomères à insaturation éthylénique du composant de liant a) un mélange de
(I) 40 à 100 % en poids d'un ester aliphatique ou cycloaliphatique de l'acide acrylique ou de l'acide méthacrylique, qui ne contient ni groupes hydroxy ni groupes carboxy, ou d'un mélange de tels esters,
(II) 0 à 30 % en poids d'un monomère à insaturation éthylénique portant au moins un groupe hydroxy dans sa molécule, ou d'un mélange de tels monomères,
(III) 0 à 10 % en poids d'un monomère à insaturation éthylénique portant au moins un groupe carboxy dans sa molécule, ou d'un mélange de tels monomères,
(IV) 0 à 50 % en poids d'un monomère à insaturation éthylénique, différent de (I), (II) et (III), ou d'un mélange de tels monomères, et
(V) 0 à 5 % en poids d'un monomère à polyinsaturation éthylénique ou d'un mélange de tels monomères,
la somme des parties en poids de (I), (II), (III), (IV) et (V) donnant toujours 100 % en poids.

5. Peinture à l'eau selon l'une quelconque des revendications 1 à 4, **caractérisée en ce que** le polymère du composant de liant b), préparé à partir de (A) et (B), présente un indice d'acide de 5 à 200, de préférence de 10 à 40, de façon particulièrement préférée de 15 à 30, un indice de groupes hydroxy de 0 à 100, de préférence de 20 à 80, et une masse moléculaire moyenne en nombre de 2 000 à 20 000, de préférence de 5 000 à 12 000.

6. Peinture à l'eau selon l'une quelconque des revendications 1 à 5, **caractérisée en ce que** le polymère du composant de liant b), préparé à partir de (A) et (B), présente un indice de polymolécularité Q = M_{W}:Mₙ de 5 à 90, de préférence de 10 à 30.

7. Peinture à l'eau selon l'une quelconque des revendications 1 à 6, **caractérisée en ce que** le polymère du composant de liant b) peut être obtenu par utilisation des composants (A) et (B) en un rapport pondéral de 1:10 à 10:1, de préférence de 1:2 à 2:1, de façon particulièrement préférée de 1:1.

8. Peinture à l'eau selon l'une quelconque des revendications 1 à 7, **caractérisée en ce qu'**on utilise en tant que composant (B) du composant de liant b), une résine polyuréthanne qui contient des doubles liaisons polymérisables qui ont été introduites dans les molécules de la résine polyuréthanne par incorporation de composés qui, outre une double liaison polymérisable, contiennent au moins encore deux groupes réactifs vis-à-vis des groupes NCO.

9. Peinture à l'eau selon l'une quelconque des revendications 1 à 8, **caractérisée en ce qu'**on utilise en tant que composant (B) du composant de liant b) une résine polyuréthanne qui contient des groupes allyléther en tant que doubles liaisons polymérisables

10. Peinture à l'eau selon l'une quelconque des revendications 1 à 10, **caractérisée en ce qu'**on utilise en tant que composant (B) du composant de liant b) une résine polyuréthanne qui contient de l'éther monoallylique de triméthylolpropane incorporé.

11. Peinture à l'eau selon l'une quelconque des revendications 1 à 10, **caractérisée en ce qu'**on peut obtenir le polymère du composant de liant b) en utilisant comme composant (B) une résine polyuréthanne qui présente un indice d'acide de 0 à 2,0.

12. Peinture à l'eau selon l'une quelconque des revendications 1 à 11, **caractérisée en ce qu'**on peut obtenir le polymère du composant de liant b) en utilisant comme composant (B) une résine polyuréthanne qui présente une masse moléculaire moyenne en nombre de 1 000 à 5 000 et contient, en moyenne statistique par molécule, de 0,2 à 0,9, de préférence de 0,3 à 0,7 double liaison polymérisable.

13. Peinture à l'eau selon l'une quelconque des revendications 1 à 12, **caractérisée en ce qu'**elle contient des pigments, en particulier des pigments monochromes.

14. Utilisation d'une peinture à l'eau selon l'une quelconque des revendications 1 à 13, en tant que peinture de base pigmentée, dans un procédé pour la production d'un revêtement de peinture bicouche à la surface d'un subjectile, dans lequel
(1) la peinture de base est appliquée à la surface du subjectile,
(2) un feuil polymère est formé à partir de la peinture de base appliquée dans l'étape (1),
(3) un vernis de finition est appliqué sur la couche de peinture de base ainsi obtenue, et ensuite
(4) on sèche au four la couche de peinture de base conjointement avec la couche de vernis de finition.

15. Utilisation d'une peinture à l'eau selon l'une quelconque des revendications 1 à 13, pour le peinturage de carrosseries d'automobiles ou de pièces de carrosseries d'automobiles.
